# EUROPEAN PATENT APPLICATION

(11) **EP 4 651 066 A1**
(43) Date of publication of application: **19.11.2025**
(21) Application number: 23916318.1
(22) Date of filing: 28.12.2023
(51) Int. Cl.: G06Q 50/00, E02D 17/20

(54) **ESTIMATION DEVICE, CONVERSION DEVICE, CARBON CREDIT SYSTEM, ESTIMATION METHOD, CONVERSION METHOD, AND STORAGE MEDIUM**

(30) Priority: 12.01.2023 JP 2023003197
(71) Applicant: NEC Corporation, 108-8001 Tokyo (JP)
(72) Inventor: HIROAKI Toshihiko, Tokyo 108-8001 (JP); HARA Wataru, Tokyo 108-8001 (JP); IKETANI Akihiko, Tokyo 108-8001 (JP)
(74) Representative: Vossius & Partner Patentanwälte Rechtsanwälte mbB
(86) International application number: PCT/JP2023/047305
(87) International publication number: WO 2024/150705

(57) **Abstract**

This estimation device is provided with a first information acquiring means that acquires first information that is expected from an object subject to a disaster, a second information acquiring means that acquires second information that is expected from an object into which a disaster prevention or disaster mitigation measure has been introduced, and an estimation means that estimates an estimated amount of suppressed carbon dioxide on the basis of the first information and the second information.

## Description

### Technical Field

The present disclosure relates to an estimation device, a conversion device, a carbon credit system, an estimation method, a conversion method, and a storage medium.

### Background Art

In recent years, it has been known to implement greenhouse gas emissions trading in order to reduce an amount of greenhouse gas emissions.

For example, PTL 1 discloses that it is effective to acquire a carbon dioxide emission amount reduction credit in a greenhouse gas emissions trading market.

### Citation List

### Patent Literature

PTL 1: JP 2005-215916 A

### Summary of Invention

### Technical Problem

Since a system disclosed in PTL 1 is a scheme that calculates suppression amounts of carbon dioxide in consideration of energy saving measures based on various types of control in buildings, it is difficult to evaluate a suppression amount of carbon dioxide in consideration of a disaster that is likely to occur in the future.

In view of any of the above problems, an object of the present disclosure is to provide an estimation device, a conversion device, a carbon credit system, an estimation method, a conversion method, and a storage medium that facilitate evaluation of a suppression amount of carbon dioxide in consideration of a disaster.

### Solution to Problem

An estimation device according to an aspect of the present disclosure includes: a first information acquisition means for acquiring first information expected for an object affected by a disaster; a second information acquisition means for acquiring second information expected for the object in which a disaster prevention measure or a disaster mitigation measure is introduced; and an estimation means for estimating an estimated carbon dioxide suppression amount based on the first information and the second information.

An estimation method according to an aspect of the present disclosure includes: acquiring first information expected for an object affected by a disaster; acquiring second information expected for the object in which a disaster prevention measure or a disaster mitigation measure is introduced; and estimating an estimated carbon dioxide suppression amount based on the first information and the second information.

A storage medium according to an aspect of the present disclosure is a storage medium storing a program for causing a computer to execute: acquiring first information expected for an object affected by a disaster; acquiring second information expected for the object in which a disaster prevention measure or a disaster mitigation measure is introduced; and estimating an estimated carbon dioxide suppression amount based on the first information and the second information.

### Advantageous Effects of Invention

According to the above aspect, it is easy to estimate the suppression amount of carbon dioxide in consideration of the disaster.

### Brief Description of Drawings

[Fig. 1] Fig. 1 is a diagram illustrating an overall configuration of a carbon credit system according to some example embodiments of the present disclosure.
[Fig. 2] Fig. 2 is a flowchart illustrating the operation of the carbon credit system according to the some example embodiments of the present disclosure.
[Fig. 3] Fig. 3 is a view illustrating an example of a case where first information and second information are simple in the some example embodiments of the present disclosure.
[Fig. 4] Fig. 4 is a view illustrating an example of a case where the first information and the second information are simple and have a long cycle in the some example embodiments of the present disclosure.
[Fig. 5] Fig. 5 is a view illustrating an example of a case where the first information and the second information are applied to existing infrastructure in the some example embodiments of the present disclosure.
[Fig. 6] Fig. 6 is a view illustrating an example of a case where the first information and the second information are evaluated within a value evaluation window in the some example embodiments of the present disclosure.
[Fig. 7] Fig. 7 is a view illustrating an example of a case where the first information and the second information are information in a period including occurrence of a disaster and reconstruction in the some example embodiments of the present disclosure.
[Fig. 8] Fig. 8 is a view illustrating an example of a case where the first information and the second information are information derived from a forest fire in the some example embodiments of the present disclosure.
[Fig. 9] Fig. 9 is a view for describing a calculation procedure of suppression amount information and a management procedure of a carbon credit in the some example embodiments of the present disclosure.
[Fig. 10] Fig. 10 is a view for describing details of Fig. 9.
[Fig. 11] Fig. 11 is a diagram illustrating an overall configuration of a carbon credit system according to some example embodiments of the present disclosure.
[Fig. 12] Fig. 12 is a view illustrating a calculation formula of an estimated carbon dioxide suppression amount according to the some example embodiments of the present disclosure.
[Fig. 13] Fig. 13 is a view illustrating a calculation procedure of suppression amount information according to the some example embodiments of the present disclosure.
[Fig. 14] Fig. 14 is a block diagram of an estimation device according to some example embodiments of the present disclosure.
[Fig. 15] Fig. 15 is a flowchart illustrating an estimation method according to some example embodiments of the present disclosure.
[Fig. 16] Fig. 16 is an example of a hardware configuration of a computer included in the estimation device and the management device according to the example embodiments of the present disclosure.

### Example Embodiment

Hereinafter, example embodiments according to the present disclosure will be described with reference to the drawings.

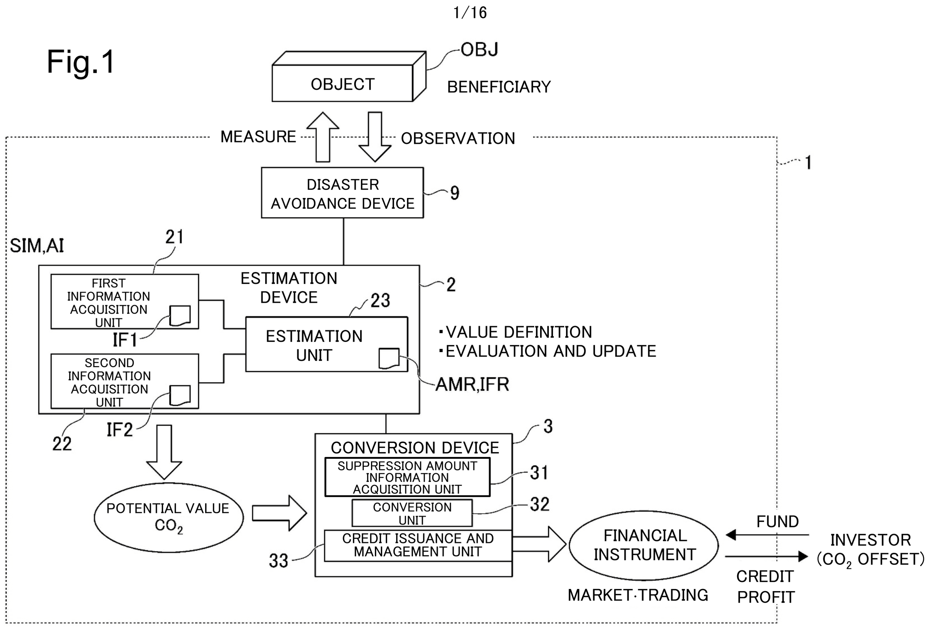

Hereinafter, some example embodiments according to the present disclosure will be described with reference to Figs. 1 to 10.

### (Configuration of Carbon Credit System)

As illustrated in Fig. 1, a carbon credit system 1 according to the some example embodiments includes a disaster avoidance device 9, an estimation device 2, and a conversion device 3.

In carbon neutrality, an amount of greenhouse gas emissions is often converted into corresponding carbon dioxide emissions and treated, and thus the overall greenhouse gas will be described hereinafter as carbon dioxide.

The carbon credit system 1 evaluates not an "emission amount" of carbon dioxide but a "suppression amount" of carbon dioxide.

That is, the carbon credit system 1 gives potential value to the suppression amount of carbon dioxide that is expected for an object OBJ by introduction of a disaster prevention measure or a disaster mitigation measure, and is used to issue a carbon credit (potential credit) and manage operation information of the carbon credit.

Examples of the object OBJ include, in addition to constructed objects and structural objects such as bridges, roads, railways, dams, banks, pipes, power transmission and communication networks, and buildings, developed lands such as parks, residential areas, and agricultural lands, and lands such as mountains, forests, rivers, lakes, marshes, and coasts which are regularly monitored and preserved due to the necessity for disaster prevention.

A beneficiary of the carbon credit issued by the carbon credit system 1 is a manager who manages the object OBJ, a user of the object OBJ, an interested person of the object OBJ, a regional resident of the object OBJ, a taxpayer for tax related to the object OBJ, and the like.

### (Configuration of Disaster Avoidance Device)

The disaster avoidance device 9 is either the disaster prevention measure or the disaster mitigation measure against a disaster that is likely to affect the object OBJ, and includes various sensors, various computers, various communication devices, various actuators, and the like.

The disaster avoidance device 9 provides information necessary for observing the object OBJ and taking measures such as reinforcement and maintenance of the object OBJ to the manager, the user, and the like of the object OBJ.

For example, as the disaster avoidance device 9, a remote sensing technology using various sensors mounted on an artificial satellite, an aircraft, and the like and/or various sensors installed in the vicinity of the object OBJ, for example, a remote sensing technology such as image analysis including a synthetic aperture radar (SAR), optical fiber sensor analysis, multiple satellite image analysis, or cross-view image collation between a site image and a satellite image is used.

The disaster avoidance device 9 provides information such as value damage avoidance information for avoiding damage to the value of the object OBJ caused by a disaster and a disaster prevention solution for preventing the object OBJ from a disaster using, for example, an artificial intelligence (AI) technology, a simulation technology, and/or a digital twin technology, and the remote sensing technology as information contributing to the disaster prevention measure or the disaster mitigation measure.

For example, in a case where the object OBJ is a constructed object or a structural object, the disaster avoidance device 9 provides information for avoiding a disaster such as a fall, breakage, collapse, immersion, contamination, or an electric shock by observing the presence or absence of a deterioration state or an abnormal state such as deflection, a crack, a crevice, a defect, distortion, weathering, corrosion, looseness, abnormal vibration, abnormal temperature, or abnormal ejection of the object OBJ, evaluating the soundness, strength characteristics, or the like of the object OBJ, or presenting a disaster measure such as repair work or maintenance work of the object OBJ.

For example, in a case where the object OBJ is a developed land or a land, the disaster avoidance device 9 provides information for avoiding a disaster such as a fall, breakage, collapse, immersion, contamination, or burning by observing a change in undulation or a degree of floating and sinking of the object OBJ, observing a change in the position, area, water level, or the like, observing the presence or absence of an abnormal event such as water leakage, a crevice, erosion, or ejection, or presenting a disaster measure such as repair work or maintenance work of the object OBJ.

For example, in a case where the object OBJ is a mountain or a forest, the disaster avoidance device 9 provides information for avoiding a disaster such as a fire by monitoring a fire of the object OBJ or presenting thinning work for suppressing the fire spread.

### (Configuration of Estimation Device)

The estimation device 2 is a device configured to estimate a carbon dioxide emission amount that can be suppressed (hereinafter, also referred to as an "estimated carbon dioxide suppression amount") from a disaster prevention measure or a disaster mitigation measure introduced into the object OBJ.

In order to define value of an amount of carbon dioxide to be suppressed, the estimation device 2 evaluates the amount of carbon dioxide to be suppressed by introduction of the disaster prevention measure or the disaster mitigation measure.

In the some example embodiments, the estimation device 2 estimates the estimated carbon dioxide suppression amount that can be suppressed by using a means for avoiding value damage and a disaster prevention solution provided by the disaster avoidance device 9.

The estimation device 2 includes a first information acquisition unit 21, a second information acquisition unit 22, and an estimation unit 23.

The first information acquisition unit 21 acquires first information IF1 expected for the object OBJ affected by a disaster.

The second information acquisition unit 22 acquires second information IF2 expected for the object OBJ in which the disaster prevention measure or the disaster mitigation measure is introduced.

The estimation unit 23 estimates an estimated carbon dioxide suppression amount AMR based on the first information IF1 and the second information IF2.

### (Configuration of Conversion Device)

The conversion device 3 is a device configured to convert the estimated carbon dioxide suppression amount AMR into a carbon credit to give potential value to the estimated carbon dioxide suppression amount AMR estimated by the estimation device 2.

The conversion device 3 includes a suppression amount information acquisition unit 31, a conversion unit 32, and a credit issuance and management unit 33.

The suppression amount information acquisition unit 31 acquires suppression amount information IFR based on the estimated carbon dioxide suppression amount AMR from the estimation device 2.

In the some example embodiments, the suppression amount information acquisition unit 31 acquires the suppression amount information IFR calculated by the estimation unit 23 of the estimation device 2 based on the estimated carbon dioxide suppression amount AMR.

The conversion unit 32 converts the suppression amount information IFR into a carbon credit.

The credit issuance and management unit 33 issues and manages the carbon credit converted by the conversion unit 32.

The credit issuance and management unit 33 manages the operation for paying an actual credit from the carbon credit at a stage of confirming a state or a situation in which the credit can be issued, for example, at a stage of confirming that a treatment or measure related to disaster prevention has been implemented for the object OBJ or at a stage of confirming that no disaster occurs within a set management period.

When the object OBJ is damaged in the middle of the operation, the credit issuance and management unit 33 manages to impair or eliminate value related to the object OBJ from the issued carbon credit, for example, manages the operation for reducing a credit to be lost due to the generated damage from the issued carbon credit.

### (Operation of Carbon Credit System)

The operation of the carbon credit system 1 according to the some example embodiments will be described.

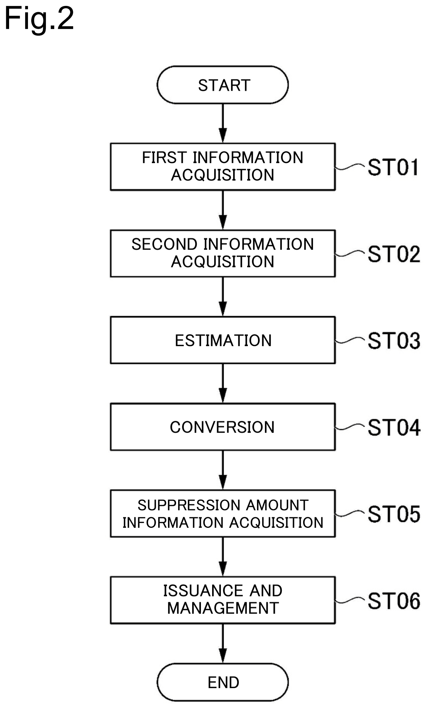

Specific patterns of the first information IF1 and the second information IF2 will be described with reference to Figs. 2 to 10.

In the operation of the carbon credit system 1, the operation of the estimation device 2 correspond to an estimation method of some example embodiments.

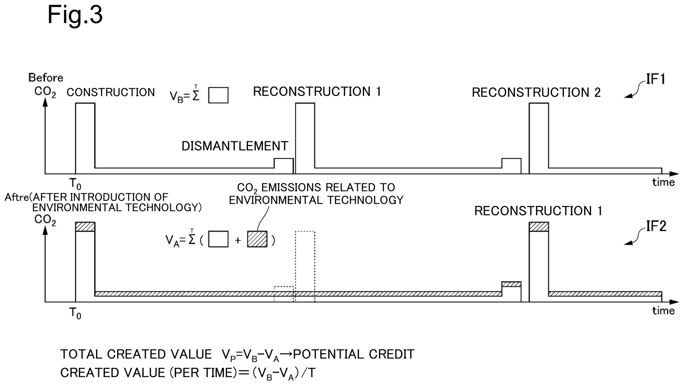

In graphs of Figs. 3 to 8, the horizontal axis represents time, and the vertical axis represents a carbon dioxide emission amount emitted in relation to the object OBJ.

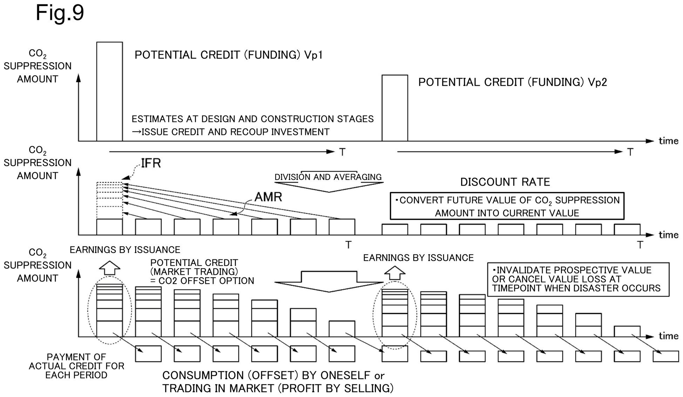

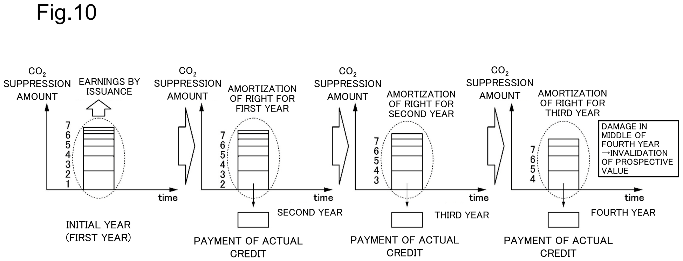

In graphs of Figs. 9 and 10, the horizontal axis represents time, and the vertical axis represents a carbon dioxide suppression amount suppressed in relation to the object OBJ and represents an amount corresponding to value of the potential credit.

As illustrated in Fig. 2, first, the first information acquisition unit 21 acquires the first information IF1 expected for the object OBJ (ST01: a first information acquisition step).

Following the execution of ST01, the second information acquisition unit 22 acquires the second information IF2 expected for the object OBJ in which the disaster prevention measure or the disaster mitigation measure is introduced (ST02: a second information acquisition step).

Following the execution of ST02, the estimation unit 23 estimates the estimated carbon dioxide suppression amount AMR based on the first information IF1 and the second information IF2 (ST03: an estimation step).

In this operation, for example, the first information IF1 and the second information IF2 may be simple information as illustrated in Fig. 3.

In Fig. 3, the first information IF1 is a carbon dioxide emission amount estimated regarding the object OBJ before introduction of a disaster prevention measure or a disaster mitigation measure.

In a case where the object OBJ is a structural object, the first information acquisition unit 21 estimates a reconstruction cycle, a life, and the like of the object OBJ before the introduction of the disaster prevention measure or the disaster mitigation measure from a structure, scale, a material, and the like of the object OBJ using statistical data, a simulation technology, an AI technology, and the like, and estimates a carbon dioxide emission amount generated during construction, during dismantlement, and during reconstruction of the object OBJ. Then, using such an estimation result, a carbon dioxide emission amount pattern emitted in relation to the object OBJ as illustrated in Fig. 3 is estimated as the first information IF1.

In the case illustrated in Fig. 3, the first information IF1 includes carbon dioxide emission amounts generated during construction, during two times of dismantlement, and during two times of reconstruction of the object OBJ.

On the other hand, the second information IF2 is a carbon dioxide emission amount estimated regarding the object OBJ after the introduction of the disaster prevention measure or the disaster mitigation measure.

Specifically, the second information IF2 is a carbon dioxide emission amount expected by introducing an environmental technology such as the carbon credit system 1 using an AI technology, a remote sensing technology, or the like as the disaster prevention measure or the disaster mitigation measure.

As a result, the second information acquisition unit 22 estimates a reconstruction cycle extended by the introduction of the disaster prevention measure or the disaster mitigation measure as compared with the reconstruction cycle in the first information IF1 necessary for preparing for a disaster, and estimates, as the second information IF2, a carbon dioxide emission amount pattern emitted in relation to the object OBJ as illustrated in Fig. 3.

In the case illustrated in Fig. 3, similarly to the first information IF1, the second information IF2 includes carbon dioxide emission amounts generated during construction, during the first dismantlement, and during the first reconstruction of the object OBJ.

On the other hand, the second information IF2 does not include the carbon dioxide emission amounts generated during the second dismantlement and during the second reconstruction as compared with the first information IF1 since the reconstruction cycle can be lengthened by the introduction of the disaster prevention measure or the disaster mitigation measure.

In addition, the second information IF2 includes a carbon dioxide emission amount generated by introducing the disaster prevention measure or the disaster mitigation measure into the first information IF1.

Using this result, the estimation unit 23 estimates the estimated carbon dioxide suppression amount AMR in a predetermined estimation period from a value obtained by subtracting the first information IF1 from the second information IF2.

The estimated carbon dioxide suppression amount AMR thus estimated has the value as the potential credit.

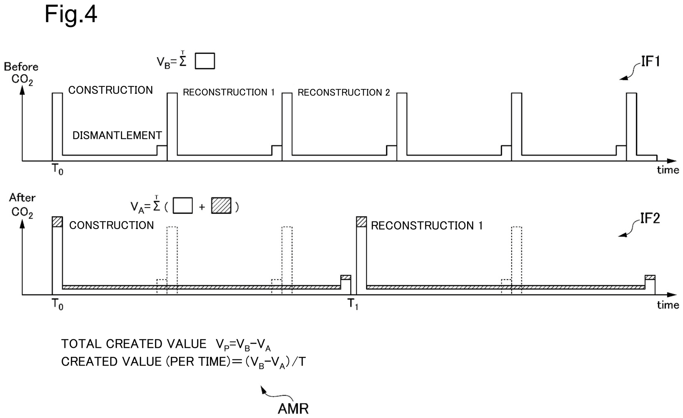

For example, the first information IF1 and the second information IF2 may be simple and long-cycle information as illustrated in Fig. 4.

As compared with the case of Fig. 3, in the case illustrated in Fig. 4, the first information IF1 includes carbon dioxide emission amounts generated during construction, during five times of dismantlement, and during five times of reconstruction of the object OBJ before introduction of a disaster prevention measure or a disaster mitigation measure.

On the other hand, the second information IF2 does not include at least carbon dioxide emission amounts generated during three times of dismantlement and during three times of reconstruction as compared with the first information IF1 since the reconstruction cycle can be lengthened by introducing the disaster prevention measure or the disaster mitigation measure.

Using this result, the estimation unit 23 estimates the estimated carbon dioxide suppression amount AMR in a predetermined estimation period from a value obtained by subtracting the first information IF1 from the second information IF2.

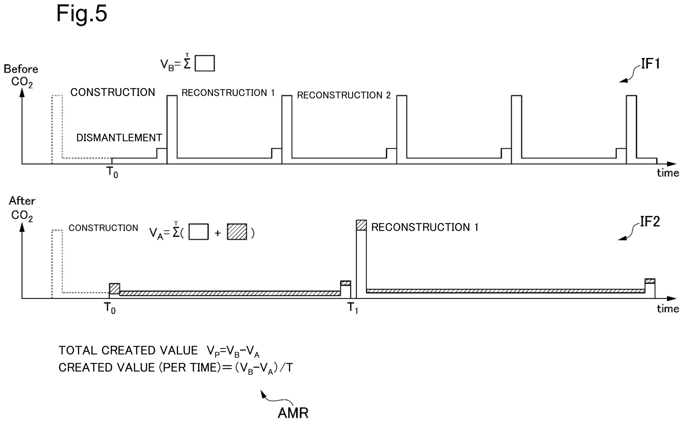

For example, the first information IF1 and the second information IF2 may be information regarding the existing object OBJ as illustrated in Fig. 5, the information not incorporating past carbon dioxide emission amounts during construction and the like.

As compared with Fig. 4, in the case illustrated in Fig. 5, the first information IF1 is applied to the existing infrastructure (object OBJ), and thus does not include a carbon dioxide emission amount generated during construction of the object OBJ.

On the other hand, the second information IF2 does not include at least carbon dioxide emission amounts generated during three times of dismantlement and during three times of reconstruction as compared with the first information IF1 since the life is extended (the reconstruction cycle can be lengthened) by introducing a disaster prevention measure or a disaster mitigation measure into the existing infrastructure.

Using this result, the estimation unit 23 estimates the estimated carbon dioxide suppression amount AMR in a predetermined estimation period from a value obtained by subtracting the first information IF1 from the second information IF2.

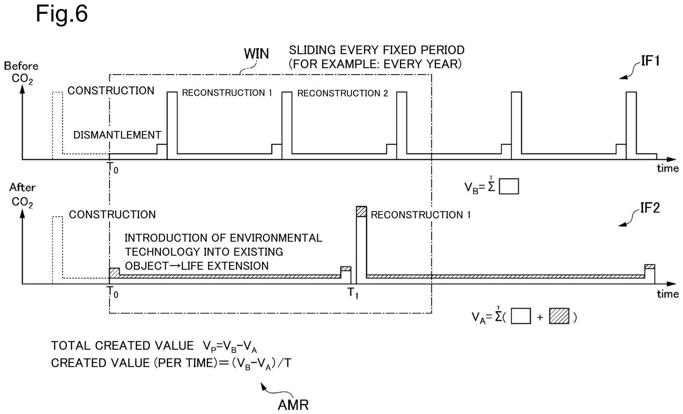

For example, the first information IF1 and the second information IF2 may be information in an evaluation period in a value evaluation window WIN as illustrated in Fig. 6.

In the case illustrated in Fig. 6 as compared with Fig. 5, the first information IF1 includes carbon dioxide emission amounts generated during three times of dismantlement and during three times of reconstruction in the value evaluation window WIN among five times of dismantlement and five times of reconstruction.

On the other hand, as compared with the first information IF1, the second information IF2 does not include carbon dioxide emission amounts generated during two times of dismantlement and during two times of reconstruction in the value evaluation window WIN.

Using this result, the estimation unit 23 estimates the estimated carbon dioxide suppression amount AMR in a predetermined estimation period from a value obtained by subtracting the first information IF1 from the second information IF2.

Here, the estimation device 2 may estimate the estimated carbon dioxide suppression amount AMR by sliding the value evaluation window WIN every fixed period (for example, every year).

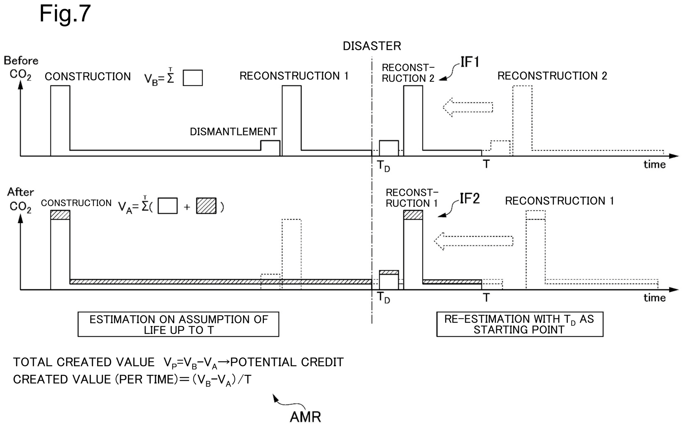

For example, the first information IF1 and the second information IF2 may be information in a period including occurrence of a disaster and reconstruction as illustrated in Fig. 7.

In the case illustrated in Fig. 7, the first information IF1 includes an estimated carbon dioxide emission amount derived from the disaster.

Specifically, the first information acquisition unit 21 estimates, as the first information IF1, a carbon dioxide emission amount pattern including carbon dioxide emission amounts (carbon dioxide emission amounts during the second dismantlement and during the second reconstruction) generated when the object OBJ is damaged by the disaster in the middle of the life of the object OBJ before a disaster prevention measure or a disaster mitigation measure is introduced and the object OBJ is reconstructed.

On the other hand, the second information IF2 includes an estimated carbon dioxide emission amount derived from the disaster when the disaster prevention measure or the disaster mitigation measure is introduced against the disaster.

Specifically, the second information acquisition unit 22 estimates, as the second information IF2, a carbon dioxide emission pattern including carbon dioxide emission amounts similar to that of the first information IF1 except that carbon dioxide emission amounts generated during the first dismantlement and during the first reconstruction, which can be avoided by introducing the disaster prevention measure or the disaster mitigation measure, are not included.

Using this result, the estimation unit 23 estimates the estimated carbon dioxide suppression amount AMR in a predetermined estimation period from a value obtained by subtracting the first information IF1 from the second information IF2.

For example, the estimated carbon dioxide suppression amount AMR estimated on the assumption of the life of the object OBJ may be re-estimated with the disaster as a starting point.

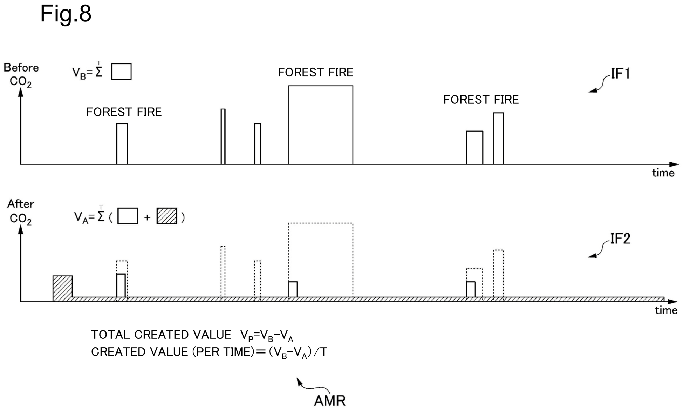

For example, in a case where the object OBJ is a mountain, the first information IF1 and the second information IF2 may be information in a period including a disaster such as a plurality of forest fires as illustrated in Fig. 8, and the information not assuming carbon dioxide emissions accompanying construction (Information assuming that carbon dioxide emissions are only carbon dioxide emissions caused by the disaster).

In the case illustrated in Fig. 8, the first information IF1 includes an estimated carbon dioxide emission amount derived from the forest fire as the disaster.

Specifically, the first information acquisition unit 21 estimates scale and a cycle of the forest fire of the object OBJ before introduction of a disaster prevention measure or a disaster mitigation measure from scale of the mountain which is the object OBJ, a state of a forest, and the like, and estimates a carbon dioxide emission amount pattern emitted by the forest fires as the first information IF1.

On the other hand, the second information IF2 includes an estimated carbon dioxide emission amount derived from the disaster when the disaster prevention measure or the disaster mitigation measure is introduced against the forest fires.

Specifically, the second information acquisition unit 22 estimates an extended cycle of the forest fire and reduced scale of the forest fire according to the introduction of the disaster prevention measure or the disaster mitigation measure, and estimates a carbon dioxide emission amount pattern emitted by the forest fires as the second information IF2.

Using this result, the estimation unit 23 estimates the estimated carbon dioxide suppression amount AMR in a predetermined estimation period from a value obtained by subtracting the first information IF1 from the second information IF2.

The estimation unit 23 calculates the suppression amount information IFR by adding the estimated carbon dioxide suppression amount AMR estimated in each predetermined estimation period of a plurality of predetermined estimation periods discounted over the plurality of predetermined estimation periods.

Specifically, as illustrated in Fig. 9, the estimation unit 23 divides a value obtained by subtracting the first information IF1 from the second information IF2 by a plurality of predetermined estimation periods for averaging to calculate a plurality of the estimated carbon dioxide suppression amounts AMR, and calculates a carbon dioxide suppression amount obtained by adding future value discounted at a predetermined discount rate and converting the added value into current value, as the suppression amount information IFR.

Following the execution of ST03, the suppression amount information acquisition unit 31 acquires the suppression amount information IFR (ST04: a suppression amount acquisition step).

Following the execution of ST04, the conversion unit 32 converts the acquired suppression amount information IFR into a carbon credit (ST05: conversion step).

Following the execution of ST05, the credit issuance and management unit 33 issues and manages the carbon credit converted by the conversion unit 32 (ST06: an issuance and management step).

For example, the credit issuance and management unit 33 may issue a carbon credit corresponding to the suppression amount information IFR (suppression amount information obtained by converting the estimated carbon dioxide suppression amounts AMR for seven years) in the initial year (first year).

As a result, the manager, the user, or the like of the object OBJ, who is a creator of the carbon credit, can obtain earnings by asking an investor to purchase the carbon credit issued by the credit issuance and management unit 33.

On the other hand, the credit issuance and management unit 33 manages operation information for paying an actual credit from the issued carbon credit at the stage of confirming a state or a situation in which the credit can be issued, for example, at a stage of confirming that a treatment or measure related to disaster prevention has been implemented for the object OBJ or at the stage of confirming that no disaster occurs.

When the object OBJ is damaged in the middle of the operation, the credit issuance and management unit 33 manages to impair or eliminate value related to the object OBJ from the issued carbon credit, for example, manages operation information for reducing a credit to be lost due to the damage generated in the object OBJ from the issued carbon credit.

Specifically, the carbon credit is operated by a mechanism as illustrated in Fig. 10.

The investor purchasing the carbon credit can receive the actual credit paid when no disaster occurs in the object OBJ from the initial year to the second year. On the other hand, the right for the first year included in the carbon credit is amortized, and a credit recalculated for six years with the second year as the initial year is held by the investor as a new carbon credit.

Thereafter, the actual credit is paid every stage (for example, every year) in which it has been confirmed that no disaster has occurred, and the right of the carbon credit is amortized.

If the object OBJ is damaged in the middle of the fourth year, in the operation of reducing the credit to be lost due to the damage generated in the object OBJ, for example, prospective value of the carbon credit is invalidated or a value loss of the object OBJ is canceled.

The credit issuance and management unit 33 manages such operation information of the carbon credit.

### (Operation and Effect)

According to the estimation device 2 of the some example embodiments, it is possible to estimate the carbon dioxide suppression amount expected when the disaster prevention measure or the disaster mitigation measure is introduced into the object OBJ.

For example, if the disaster prevention measure or the disaster mitigation measure is introduced into the object OBJ, a cycle of reconstruction of a constructed object or a structural object, logging of a mountain, or the like necessary for preparing for a disaster is extended, or scale of the disaster is actually reduced, so that a carbon dioxide emission amount is suppressed. The estimation device 2 can estimate such a carbon dioxide suppression amount.

Therefore, it is easy to estimate the carbon dioxide suppression amount in consideration of the disaster.

According to the estimation devices 2 of the some example embodiments, since the first information IF1 and the second information IF2 include the estimated carbon dioxide emission amount derived from the disaster, it is possible to avoid or mitigate damage by the disaster prevention measure or the disaster mitigation measure with respect to the disaster that actually occurs in the object OBJ, so that it is possible to estimate the amount of carbon dioxide that can be suppressed.

In addition, according to the estimation device 2 of the some example embodiments, since the suppression amount information is calculated by adding the estimated carbon dioxide suppression amount AMR estimated in each predetermined estimation period of the plurality of predetermined estimation periods discounted over the plurality of predetermined estimation periods, it is possible to calculate the carbon dioxide suppression amount converted into the current value by reducing the future value.

In addition, according to the conversion device 3 of the some example embodiments, since the suppression amount information IFR can be converted into the carbon credit, it is possible to add financial value to the object OBJ in which the disaster prevention measure or the disaster mitigation measure is introduced.

Since the suppression amount information IFR can be converted into the carbon credit, for example, the carbon credit can be estimated at design and construction stages of the object OBJ, and it is possible to issue the carbon credit and recoup the investment for the disaster prevention measure or the like at the design and construction stages of the object OBJ.

According to the conversion device 3 of the some example embodiments, at a stage of confirming a state or a situation in which a credit can be issued, for example, at a stage of confirming that a treatment or a measure related to disaster prevention has been implemented on the object OBJ or at a stage of confirming that no disaster has occurred, the operation of paying an actual credit from the carbon credit is managed. Therefore, it is possible to support a policy of giving a reward to the carbon credit in response to the state or situation in which the credit can be issued, such as the implementation of the treatment or the measure related to the disaster or no occurrence of the disaster.

According to the conversion device 3 of the some example embodiments, it is possible to support handling of the carbon credit after the object OBJ is damaged since the management for impairing or eliminating the value related to the object OBJ from the issued carbon credit, for example, the management of the operation information for reducing the credit to be lost due to the damage generated in the object OBJ by the disaster from the issued carbon credit are performed.

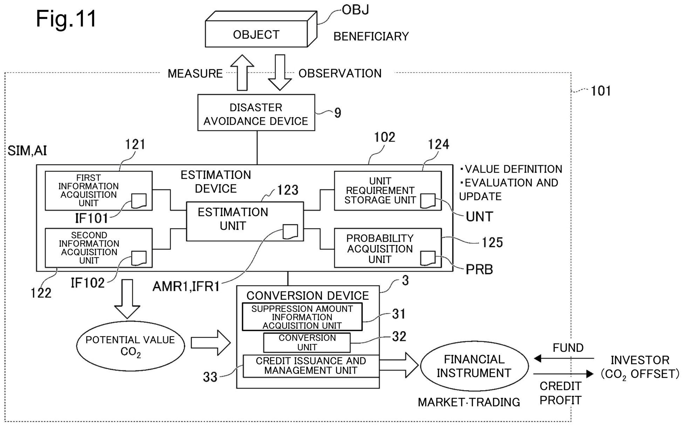

Hereinafter, some example embodiments according to the present disclosure will be described with reference to Fig. 11.

A carbon credit system 101 of the some example embodiments is similar to the carbon credit system 1 of the above-described some example embodiments except that specific first information and second information are different and a unit requirement and an occurrence probability are used.

In contrast to the carbon credit system 1 of the above-described some example embodiments, the carbon credit system 101 of some example embodiments includes an estimation device 102 instead of the estimation device 2.

### (Configuration of Estimation Device)

In the some example embodiments, the estimation device 102 includes a first information acquisition unit 121, a second information acquisition unit 122, an estimation unit 123, a unit requirement storage unit 124, and a probability acquisition unit 125.

In the some example embodiments, the first information acquisition unit 121 acquires an object damage cost expected due to a disaster to the object OBJ as first information IF101 expected for the object OBJ affected by the disaster.

In the some example embodiments, the second information acquisition unit 122 acquires a disaster prevention rate, expected for the object OBJ in which a disaster prevention measure or a disaster mitigation measure is introduced, as second information IF102 expected for the object OBJ in which the disaster prevention measure or the disaster mitigation measure is introduced.

The unit requirement storage unit 124 stores a unit requirement UNT capable of converting the damage cost into a carbon dioxide emission amount.

The probability acquisition unit 125 acquires an occurrence probability PRB of the disaster affecting the object OBJ.

In the some example embodiments, the estimation unit 123 estimates an estimated carbon dioxide suppression amount AMR1 based on the unit requirement UNT, the object damage cost, the occurrence probability PRB, and the disaster prevention rate.

### (Operation of Carbon Credit System)

The operation of the carbon credit system 101 of the some example embodiments is described.

The carbon credit system 101 of the some example embodiments executes each step illustrated in Fig. 2 similarly to the carbon credit system 1 of the above-described some example embodiments.

In the operation of the carbon credit system 101, the operation of the estimation device 102 corresponds to the estimation method of the some example embodiments.

In the some example embodiments, before the execution of ST01 illustrated in Fig. 2, the unit requirement storage unit 124 stores the unit requirement UNT capable of converting the damage cost into the carbon dioxide emission amount, and the probability acquisition unit 125 acquires the occurrence probability PRB of the disaster affecting the object OBJ.

For example, in the case of a constructed object, since a relationship between an amount of concrete forming the constructed object and an amount of electric power and fuel required to drive a construction machine for reconstructing the constructed object is proportional, a relationship between a damage cost of the constructed object related to the amount of concrete and an amount of carbon dioxide emitted during reconstruction is also proportional. Using such a relationship, a ratio of the carbon dioxide emission amount to the damage cost is determined and is stored in the unit requirement storage unit 124 as the unit requirement UNT capable of converting the damage cost into the carbon dioxide emission amount.

For example, in a case where the object OBJ is a constructed object, the probability acquisition unit 125 specifies an occurrence probability per year of a natural disaster such as an earthquake, a typhoon, or a flood of the scale that causes a disaster to the object OBJ (an annual occurrence probability of the disaster) from statistical data, and estimates the annual occurrence probability of the disaster affecting the object OBJ as the occurrence probability PRB.

Then, in ST01, the first information acquisition unit 121 acquires the object damage cost expected due to the disaster to the object OBJ as the first information IF101 expected for the object OBJ affected by the disaster.

For example, in a case where the object OBJ is a constructed object, the first information acquisition unit 121 calculates a damage cost when the object OBJ is completely destroyed from an amount of concrete of the object OBJ specified from the specification, design drawing, or the like of the object OBJ using statistical data, a simulation technology, an AI technology, and the like, and estimates the calculated damage cost as the object damage cost.

Following the execution of ST01, in ST02, the second information acquisition unit 122 acquires a disaster prevention rate, expected for the object OBJ in which a disaster prevention measure or a disaster mitigation measure is introduced, as the second information IF102 expected for the object OBJ in which the disaster prevention measure or the disaster mitigation measure is introduced.

For example, the second information acquisition unit 122 estimates the disaster prevention rate from statistical data obtained when the disaster prevention measure or the disaster mitigation measure is applied to the same type of object OBJ.

Following the execution of ST02, in ST03, the estimation unit 123 estimates the estimated carbon dioxide suppression amount AMR1 based on the unit requirement UNT, the object damage cost, the occurrence probability PRB, and the disaster prevention rate.

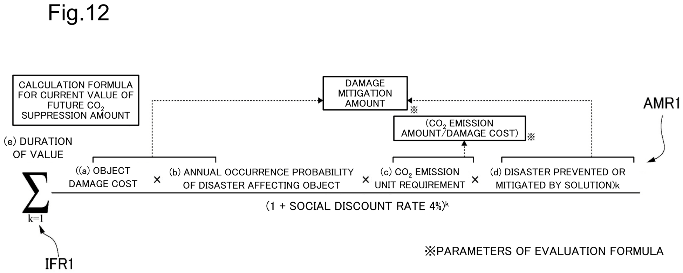

For example, the estimation unit 123 calculates the estimated carbon dioxide suppression amount AMR1 = the object damage cost × the occurrence probability PRB × the unit requirement UNT × the disaster prevention rate according to a calculation formula of Fig. 12.

Further, the estimation unit 123 calculates suppression amount information IFR1 by adding the estimated carbon dioxide suppression amount AMR1 estimated in each predetermined estimation period of a plurality of predetermined estimation periods discounted over the plurality of predetermined estimation periods.

Specifically, future value is subtracted from the estimated carbon dioxide suppression amount AMR1 according to the calculation formula of Fig. 12 to calculate the suppression amount information IFR1 which is a new estimated carbon dioxide suppression amount converted into current value.

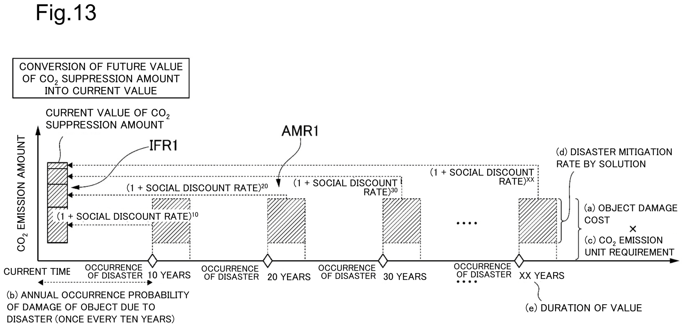

As illustrated in Fig. 13, the suppression amount information IFR1 calculated in this manner is calculated by discounting value of the estimated carbon dioxide suppression amount AMR1 estimated in each period of 10 years ahead, 20 years ahead, and 30 years ahead and adding the discounted value as the current value.

Thereafter, ST04 and subsequent steps are executed for the calculated suppression amount information IFR1 as in the above-described some example embodiments.

### (Operation and Effect)

Similarly to the estimation devices 2 of the above-described some example embodiments, according to the estimation devices 102 of the some example embodiments, it is possible to estimate the carbon dioxide suppression amount expected when the disaster prevention measure or the disaster mitigation measure is introduced into the object OBJ.

Therefore, it is easy to estimate the carbon dioxide suppression amount in consideration of the disaster.

According to the estimation device 102 of the some example embodiments, since the estimated carbon dioxide suppression amount AMR1 can be estimated based on the object damage cost, the occurrence probability PRB, the unit requirement UNT, and the disaster prevention rate, it is easy to grasp the relationship between the estimated carbon dioxide suppression amount AMR1 and various parameters.

Similarly to the estimation devices 2 of the above-described some example embodiments, according to the estimation devices 102 of the some example embodiments, since the suppression amount information IFR1 is calculated by adding the estimated carbon dioxide suppression amount AMR1 estimated in each predetermined estimation period of the plurality of predetermined estimation periods discounted over the plurality of predetermined estimation periods, it is possible to calculate the carbon dioxide suppression amount converted into the current value by reducing the future value.

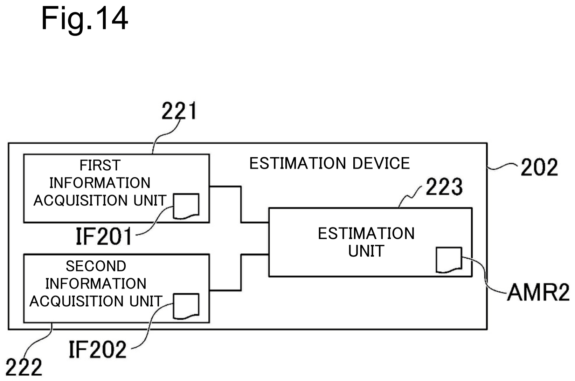

Hereinafter, some example embodiments according to the present disclosure will be described with reference to Fig. 14.

As illustrated in Fig. 14, an estimation device 202 of the some example embodiments includes a first information acquisition unit 221, a second information acquisition unit 222, and an estimation unit 223.

The first information acquisition unit 221 acquires first information IF201 expected for an object affected by a disaster.

The second information acquisition unit 222 acquires second information IF202 expected for the object in which a disaster prevention measure or a disaster mitigation measure is introduced.

The estimation unit 223 estimates an estimated carbon dioxide suppression amount AMR2 based on the first information IF201 and the second information IF202.

According to the estimation device 202 of the some example embodiments, it is possible to estimate the carbon dioxide suppression amount expected when the disaster prevention measure or the disaster mitigation measure is introduced into the object OBJ.

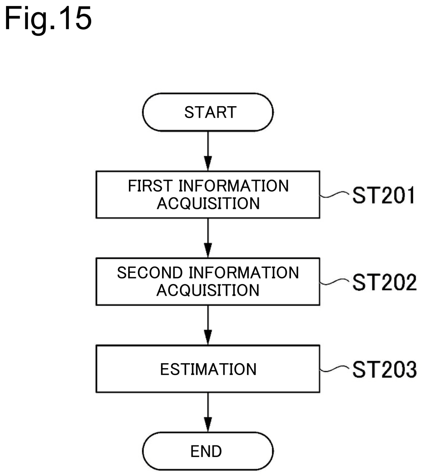

Hereinafter, some example embodiments according to the present disclosure will be described with reference to Fig. 15.

As illustrated in Fig. 15, the estimation method of the some example embodiments includes: acquiring first information expected for an object affected by a disaster (ST201); acquiring second information expected for the object in which a disaster prevention measure or a disaster mitigation measure is introduced (ST202); and estimating an estimated carbon dioxide suppression amount based on the first information and the second information (ST203).

According to the estimation method of the some example embodiments, it is possible to estimate the carbon dioxide suppression amount expected when the disaster prevention measure or the disaster mitigation measure is introduced into the object OBJ.

### (Hardware Configuration of Processing Device)

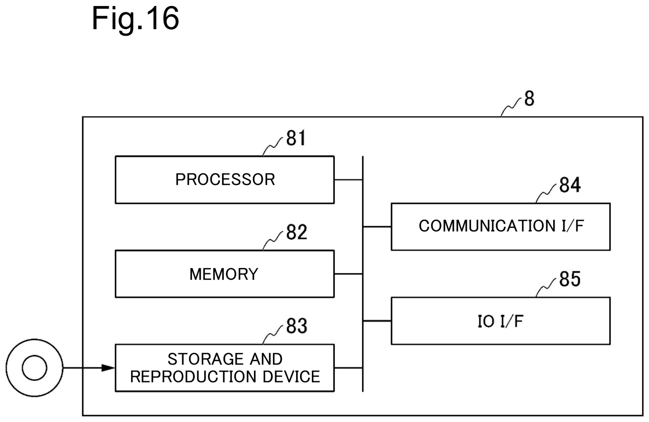

An example of a hardware configuration for achieving each device of the estimation devices and the conversion devices in several example embodiments described above will be described with reference to Fig. 16.

As illustrated in Fig. 16, each device of the estimation devices and the conversion devices is a computer 8 including hardware of a processor 81, a memory 82, a storage and reproduction device 83, a communication interface (I/F) 84, and an input output interface (IO I/F) 85.

The processor 81 is, for example, a central processing unit (CPU).

The memory 82 is a storage medium such as a random access memory (RAM) or a read only memory (ROM).

The storage and reproduction device 83 is a device configured to store a program, data, and the like in external media such as a compact disc read only memory (CD-ROM), a digital versatile disc (DVD), and a flash memory, and reproduce the program, data, and the like of the external media.

The communication I/F 84 is an interface that communicates between the computer 8 and other devices via a communication line such as the Internet or a dedicated communication line.

The IO I/F 85 is an interface configured to perform input of a source program, input and output of information and the like between the computer 8 and other devices, and the like.

### (Computer Program)

A program (first program) for achieving all or some of the functions of the estimation device in the above-described some example embodiments may be stored in a computer-readable storage medium (first storage medium), and a computer system (first computer) may read and execute the program stored in the storage medium to perform processing of each unit.

In addition, a program (second program) for achieving all or some of the functions of the conversion device according to the above-described some example embodiments may be stored in a computer-readable storage medium (second storage medium), and a computer system (second computer) may read and execute the program stored in the storage medium to perform processing of each unit.

The "computer system" herein is assumed to include hardware such as an operating system (OS) and peripheral devices.

In addition, the "computer system" is assumed to include a home page provision environment (or display environment) when the World Wide Web (WWW) system is used.

In addition, the "computer-readable storage medium" refers to a portable medium such as a flexible disk, a magneto-optical disk, a ROM, or a CD-ROM, or a storage device such as a hard disk built in the computer system.

In addition, the "computer-readable storage medium" is assumed to include one dynamically holding the program for a short time, such as a communication line in a case where the program is transmitted via a network such as the Internet or the communication line such as a telephone line.

Furthermore, the "computer-readable storage medium" is assumed to include one holding the program for a certain period of time, such as a volatile memory inside the computer system serving as a server or a client in a case where the program is transmitted via a network such as the Internet or a communication line such as a telephone line.

For example, the program may be configured to achieve some of the functions described above, and may be capable of achieving the functions described above in combination with the other program already stored in the computer system.

### (Modifications of Example Embodiments)

In the above-described some example embodiments, the estimated carbon dioxide suppression amount is estimated in each predetermined estimation period of the plurality of predetermined estimation periods, but any amount may be used as long as the amount is a carbon dioxide suppression amount.

As a modification, the estimated carbon dioxide suppression amount may be a carbon dioxide suppression amount in the entire duration of value of the object OBJ, instead of the carbon dioxide suppression amount in each predetermined estimation period.

In the above-described some example embodiments, the suppression amount information is obtained by adding the estimated carbon dioxide suppression amount estimated in each predetermined estimation period discounted over the plurality of predetermined estimation periods, but any information may be used as long as the information indicates a carbon dioxide suppression amount.

As a modification, the suppression amount information may be calculated by simple addition over a plurality of predetermined estimation periods without discounting.

As another modification, the suppression amount information may be a carbon dioxide suppression amount in the entire duration of value of the object OBJ.

Although some example embodiments of the present disclosure have been described above, the some example embodiments have been illustrated by way of example and are not intended to limit the scope of the present disclosure. The some example embodiments can be implemented in various other forms, and various omissions, substitutions, and changes can be made without departing from the gist of the present disclosure. And each example embodiment can be appropriately combined with other example embodiments.

Some or all of the above-described example embodiments may be described as the following supplementary notes, but are not limited to the following supplementary notes.

### (Supplementary Note 1)

An estimation device including:
a first information acquisition means for acquiring first information expected for an object affected by a disaster;
a second information acquisition means for acquiring second information expected for the object in which a disaster prevention measure or a disaster mitigation measure is introduced; and
an estimation means for estimating an estimated carbon dioxide suppression amount based on the first information and the second information.

### (Supplementary Note 2)

The estimation device according to Supplementary Note 1, wherein
the first information includes an estimated carbon dioxide emission amount derived from the disaster, and
the second information includes an estimated carbon dioxide emission amount derived from the disaster when the disaster prevention measure or the disaster mitigation measure is introduced against the disaster.

### (Supplementary Note 3)

The estimation device according to Supplementary Note 1 or 2, further including:
a unit requirement storage means for storing a unit requirement capable of converting a damage cost into a carbon dioxide emission amount; and
a probability acquisition means for acquiring an occurrence probability of the disaster,
wherein the first information includes an object damage cost expected due to the disaster to the object,
the second information includes a disaster prevention rate expected for the object in which the disaster prevention measure or the disaster mitigation measure is introduced, and
the estimation means estimates the estimated carbon dioxide suppression amount based on the unit requirement, the object damage cost, the occurrence probability, and the disaster prevention rate.

### (Supplementary Note 4)

The estimation device according to any one of Supplementary Notes 1 to 3, wherein the estimation means calculates suppression amount information by adding the estimated carbon dioxide suppression amount estimated in each predetermined estimation period of a plurality of predetermined estimation periods discounted over the plurality of predetermined estimation periods.

### (Supplementary Note 5)

A conversion device including:
a suppression amount information acquisition means for acquiring suppression amount information based on the estimated carbon dioxide suppression amount estimated by the estimation device according to any one of Supplementary Notes 1 to 4; and
a conversion means for converting the acquired suppression amount information into a carbon credit.

### (Supplementary Note 6)

The conversion device according to Supplementary Note 5, further including a credit issuance and management means for managing operation information for paying an actual credit from the carbon credit at a stage of confirming a state or a situation in which the credit is issuable.

### (Supplementary Note 7)

The conversion device according to Supplementary Note 6, wherein the credit issuance and management means manages operation information for impairing or eliminating value related to the object from the carbon credit.

### (Supplementary Note 8)

A carbon credit system including:
the conversion device according to any one of Supplementary Notes 5 to 7; and
the estimation device.

### (Supplementary Note 9)

An estimation method including:
acquiring first information expected for an object affected by a disaster;
acquiring second information expected for the object in which a disaster prevention measure or a disaster mitigation measure is introduced; and
estimating an estimated carbon dioxide suppression amount based on the first information and the second information.

### (Supplementary Note 10)

The estimation method according to Supplementary Note 9, wherein
the first information includes an estimated carbon dioxide emission amount derived from the disaster, and
the second information includes an estimated carbon dioxide emission amount derived from the disaster when the disaster prevention measure or the disaster mitigation measure is introduced against the disaster.

### (Supplementary Note 11)

The estimation method according to Supplementary Note 9 or 10, further including:
storing a unit requirement capable of converting a damage cost into a carbon dioxide emission amount; and
acquiring an occurrence probability of the disaster,
wherein the first information includes an object damage cost expected due to the disaster to the object,
the second information includes a disaster prevention rate expected for the object in which the disaster prevention measure or the disaster mitigation measure is introduced, and
the estimated carbon dioxide suppression amount is estimated based on the unit requirement, the object damage cost, the occurrence probability, and the disaster prevention rate.

### (Supplementary Note 12)

The estimation method according to any one of Supplementary Notes 9 to 11, further including calculating suppression amount information by adding the estimated carbon dioxide suppression amount estimated in each predetermined estimation period of a plurality of predetermined estimation periods discounted over the plurality of predetermined estimation periods.

### (Supplementary Note 13)

A conversion method including:
acquiring suppression amount information based on the estimated carbon dioxide suppression amount estimated by the estimation method according to any one of Supplementary Notes 9 to 12; and
converting the acquired suppression amount information into a carbon credit.

### (Supplementary Note 14)

The conversion method according to Supplementary Note 13, further including managing operation information for paying an actual credit from the carbon credit at a stage of confirming a state or a situation in which the credit is issuable.

### (Supplementary Note 15)

The conversion method according to Supplementary Note 14, further including managing operation information for impairing or eliminating value related to the object from the carbon credit.

### (Supplementary Note 16)

The conversion method according to any one of Supplementary Notes 13 to 15, further comprising executing the estimation method.

### (Supplementary Note 17)

A first storage medium storing a first program for causing a first computer to execute:
acquiring first information expected for an object affected by a disaster;
acquiring second information expected for the object in which a disaster prevention measure or a disaster mitigation measure is introduced; and
estimating an estimated carbon dioxide suppression amount based on the first information and the second information.

### (Supplementary Note 18)

The first storage medium according to Supplementary Note 17, wherein
the first information includes an estimated carbon dioxide emission amount derived from the disaster, and
the second information includes an estimated carbon dioxide emission amount derived from the disaster when the disaster prevention measure or the disaster mitigation measure is introduced against the disaster.

### (Supplementary Note 19)

The first storage medium according to Supplementary Note 17 or 18, wherein
the first program further causes the first computer to execute:
storing a unit requirement capable of converting a damage cost into a carbon dioxide emission amount; and
acquiring an occurrence probability of the disaster,
the first information includes an object damage cost expected due to the disaster to the object,
the second information includes a disaster prevention rate expected for the object in which the disaster prevention measure or the disaster mitigation measure is introduced,
the estimated carbon dioxide suppression amount is estimated based on the unit requirement, the object damage cost, the occurrence probability, and the disaster prevention rate.

### (Supplementary Note 20)

The first storage medium according to any one of Supplementary Notes 17 to 19, wherein the first program further causes the first computer to execute calculating suppression amount information by adding the estimated carbon dioxide suppression amount estimated in each predetermined estimation period of a plurality of predetermined estimation periods discounted over the plurality of predetermined estimation periods.

### (Supplementary Note 21)

A second storage medium storing a second program for causing a second computer to execute:
acquiring suppression amount information based on the estimated carbon dioxide suppression amount estimated by executing the first program stored in the first storage medium according to any one of Supplementary Notes 17 to 20; and
converting the acquired suppression amount information into a carbon credit.

### (Supplementary Note 22)

The second storage medium according to Supplementary Note 21, wherein the second program further causes the second computer to execute managing operation information for paying an actual credit from the carbon credit at a stage of confirming a state or a situation in which the credit is issuable.

### (Supplementary Note 23)

The second storage medium according to Supplementary Note 22, wherein the second program further causes the second computer to execute managing operation information for impairing or eliminating value related to the object from the carbon credit.

The present application claims priority to Japanese Patent Application No. 2023-003197 filed in Japan on January 12, 2023, the contents of which are incorporated herein by reference.

### Industrial Applicability

According to the above aspect, it is easy to estimate the suppression amount of carbon dioxide in consideration of the disaster. Reference Signs List

- 1: carbon credit system
- 2: estimation device
- 3: conversion device
- 8: computer
- 9: disaster avoidance device
- 21: first information acquisition unit
- 22: second information acquisition unit
- 23: estimation unit
- 31: suppression amount information acquisition unit
- 32: conversion unit
- 33: credit issuance and management unit
- 81: processor
- 82: memory
- 83: storage and reproduction device
- 84: communication I/F
- 85: IO I/F
- 101: carbon credit system
- 102: estimation device
- 121: first information acquisition unit
- 122: second information acquisition unit
- 123: estimation unit
- 124: unit requirement storage unit
- 125: probability acquisition unit
- 202: estimation device
- 221: first information acquisition unit
- 222: second information acquisition unit
- 223: estimation unit
- AMR: estimated carbon dioxide suppression amount
- AMR1: estimated carbon dioxide suppression amount
- AMR2: estimated carbon dioxide suppression amount
- IF1: first information
- IF2: second information
- IF101: first information
- IF102: second information
- IF201: first information
- IF202: second information
- IFR: suppression amount information
- IFR1: suppression amount information
- OBJ: object
- PRB: occurrence probability
- SAR: satellite
- UNT: unit requirement
- WIN: value evaluation window

## Claims

1. An estimation device comprising:
a first information acquisition means for acquiring first information expected for an object affected by a disaster;
a second information acquisition means for acquiring second information expected for the object in which a disaster prevention measure or a disaster mitigation measure is introduced; and
an estimation means for estimating an estimated carbon dioxide suppression amount based on the first information and the second information.

2. The estimation device according to claim 1, wherein
the first information includes an estimated carbon dioxide emission amount derived from the disaster, and
the second information includes an estimated carbon dioxide emission amount derived from the disaster when the disaster prevention measure or the disaster mitigation measure is introduced against the disaster.

3. The estimation device according to claim 1 or 2, further comprising:
a unit requirement storage means for storing a unit requirement capable of converting a damage cost into a carbon dioxide emission amount; and
a probability acquisition means for acquiring an occurrence probability of the disaster,
wherein the first information includes an object damage cost expected due to the disaster to the object,
the second information includes a disaster prevention rate expected for the object in which the disaster prevention measure or the disaster mitigation measure is introduced, and
the estimation means estimates the estimated carbon dioxide suppression amount based on the unit requirement, the object damage cost, the occurrence probability, and the disaster prevention rate.

4. The estimation device according to any one of claims 1 to 3, wherein the estimation means calculates suppression amount information by adding the estimated carbon dioxide suppression amount estimated in each predetermined estimation period of a plurality of predetermined estimation periods discounted over the plurality of predetermined estimation periods.

5. A conversion device comprising:
a suppression amount information acquisition means for acquiring suppression amount information based on the estimated carbon dioxide suppression amount estimated by the estimation device according to any one of claims 1 to 4; and
a conversion means for converting the acquired suppression amount information into a carbon credit.

6. The conversion device according to claim 5, further comprising a credit issuance and management means for managing operation information for paying an actual credit from the carbon credit at a stage of confirming a state or a situation in which the credit is issuable.

7. The conversion device according to claim 6, wherein the credit issuance and management means manages operation information for impairing or eliminating value related to the object from the carbon credit.

8. A carbon credit system comprising:
the conversion device according to any one of claims 5 to 7; and
the estimation device.

9. An estimation method comprising:
acquiring first information expected for an object affected by a disaster;
acquiring second information expected for the object in which a disaster prevention measure or a disaster mitigation measure is introduced; and
estimating an estimated carbon dioxide suppression amount based on the first information and the second information.

10. The estimation method according to claim 9, wherein
the first information includes an estimated carbon dioxide emission amount derived from the disaster, and
the second information includes an estimated carbon dioxide emission amount derived from the disaster when the disaster prevention measure or the disaster mitigation measure is introduced against the disaster.

11. The estimation method according to claim 9 or 10, further comprising:
storing a unit requirement capable of converting a damage cost into a carbon dioxide emission amount; and
acquiring an occurrence probability of the disaster,
wherein the first information includes an object damage cost expected due to the disaster to the object,
the second information includes a disaster prevention rate expected for the object in which the disaster prevention measure or the disaster mitigation measure is introduced, and
the estimated carbon dioxide suppression amount is estimated based on the unit requirement, the object damage cost, the occurrence probability, and the disaster prevention rate.

12. The estimation method according to any one of claims 9 to 11, further comprising calculating suppression amount information by adding the estimated carbon dioxide suppression amount estimated in each predetermined estimation period of a plurality of predetermined estimation periods discounted over the plurality of predetermined estimation periods.

13. A conversion method comprising:
acquiring suppression amount information based on the estimated carbon dioxide suppression amount estimated by the estimation method according to any one of claims 9 to 12; and
converting the acquired suppression amount information into a carbon credit.

14. The conversion method according to claim 13, further comprising managing operation information for paying an actual credit from the carbon credit at a stage of confirming a state or a situation in which the credit is issuable.

15. The conversion method according to claim 14, further comprising managing operation information for impairing or eliminating value related to the object from the carbon credit.

16. The conversion method according to any one of claims 13 to 15, further comprising executing the estimation method.

17. A storage medium storing a program for causing a computer to execute:
acquiring first information expected for an object affected by a disaster;
acquiring second information expected for the object in which a disaster prevention measure or a disaster mitigation measure is introduced; and
estimating an estimated carbon dioxide suppression amount based on the first information and the second information.

18. The storage medium according to claim 17, wherein
the first information includes an estimated carbon dioxide emission amount derived from the disaster, and
the second information includes an estimated carbon dioxide emission amount derived from the disaster when the disaster prevention measure or the disaster mitigation measure is introduced against the disaster.

19. The storage medium according to claim 17 or 18, wherein
the program further causes the computer to execute:
storing a unit requirement capable of converting a damage cost into a carbon dioxide emission amount; and
acquiring an occurrence probability of the disaster,
the first information includes an object damage cost expected due to the disaster to the object,
the second information includes a disaster prevention rate expected for the object in which the disaster prevention measure or the disaster mitigation measure is introduced,
the estimated carbon dioxide suppression amount is estimated based on the unit requirement, the object damage cost, the occurrence probability, and the disaster prevention rate.

20. The storage medium according to any one of claims 17 to 19, wherein the program further causes the computer to execute calculating suppression amount information by adding the estimated carbon dioxide suppression amount estimated in each predetermined estimation period of a plurality of predetermined estimation periods discounted over the plurality of predetermined estimation periods.
